# EUROPEAN PATENT APPLICATION

(11) **EP 4 703 173 A1**
(43) Date of publication of application: **04.03.2026**
(21) Application number: 24196776.9
(22) Date of filing: 27.08.2024
(51) Int. Cl.: B60K 35/10, B60K 35/25

(54) **METHOD FOR CONTROLLING A USER INPUT DEVICE FOR A VEHICLE, DATA PROCESSING DEVICE, COMPUTER PROGRAM, COMPUTER READABLE STORAGE MEDIUM, USER INPUT SYSTEM FOR A VEHICLE, AND VEHICLE**

(71) Applicant: Volvo Car Corporation, 405 31 Göteborg (SE)
(72) Inventor: WICKMAN, Casper, 40531 Göteborg (SE); LUNDGREN, Patrik, 40531 Göteborg (SE); MYHRMAN, Martin, 40531 Göteborg (SE); TENGSTRAND, Per, 40531 Göteborg (SE)
(74) Representative: Maiwald GmbH

(57) **Abstract**

The disclosure relates to a method for controlling a user input device (14) for a vehicle (10), wherein the user input device (14) can be manipulated by a user (16). The method comprises obtaining first data indicative of a manipulation of the user input device (14). Additionally or alternatively, the method comprises obtaining second data indicative of an environmental condition. Furthermore, the method comprises selecting a haptic feedback type for the user input device (14) out of a plurality of haptic feedback types based on the first data and/or based on the second data. Additionally, the method comprises triggering a haptic feedback of the selected haptic feedback type. Moreover, a data processing device (54) is explained. Further, a computer program (62) and a computer-readable storage medium (60) are presented. Additionally, a user input system (12) for a vehicle (10) is presented. Additionally, a vehicle (10) comprising a user input system (12) is explained.

## Description

### TECHNICAL FIELD

The present disclosure relates to a method for controlling a user input device for a vehicle.

The disclosure is additionally directed to a data processing device comprising means for carrying out the method mentioned above.

Moreover, the disclosure is about a computer program comprising instructions which, when the program is executed by a computer, cause the computer to carry out the method mentioned above.

Further, the disclosure is about a computer-readable storage medium comprising instructions which, when executed by a computer, cause the computer to carry out the method mentioned above.

Moreover, the disclosure is about a user input system for a vehicle.

In addition, the disclosure is about a vehicle comprising a user input system mentioned above.

### BACKGROUND ART

Modem vehicles offer a variety of functionalities, e.g. in the fields of occupant comfort, entertainment, communication, and/or navigation. Moreover, modern vehicles can be adapted to a user's preferences by adjusting a number of vehicle settings. These functionalities and vehicle settings may be adjusted using associated controls such as push buttons, rotary knobs, rotary-push knobs, sliders, touch screens etc. Thus, when designing a vehicle, an appropriate control needs to be provided for each functionality. However, due to the high number of functionalities it is usually not appropriate to provide one control per functionality. This applies both from a perspective of usability and from a perspective of keeping the vehicle structurally simple. Thus, very often controls are provided which allow adjustment of more than one functionality, whereby it must be taken into account that a simple adjustability of all associated functionalities is possible.

### SUMMARY

An objective of the present disclosure is to further enhance the usability of controls in the vehicle.

The problem is at least partially solved or alleviated by the subject matter of the independent claims of the present disclosure, wherein further examples are incorporated in the dependent claims.

The problem is at least partially solved or alleviated by a method for controlling a user input device for a vehicle. The user input device can be manipulated by a user. The method comprises:
- obtaining first data indicative of a manipulation of the user input device and/or obtaining second data indicative of an environmental condition,
- selecting a haptic feedback type for the user input device out of a plurality of haptic feedback types based on the first data and/or based on the second data, and
- triggering a haptic feedback of the selected haptic feedback type.

The general idea underlying the method for controlling a user input device is, thus, to detect that a certain manipulation of the user input device is performed and/or to consider an environmental condition. A haptic feedback type is selected on the basis of this. Consequently, a plurality of haptic feedback types may be available for controlling the user input device, which may be selected specifically based on the manipulation and/or the environmental condition. In other words, a suitable haptic feedback type can be individually selected for the detected manipulation and/or the detected environmental condition. This makes it easier for the user to manipulate or operate the user input device and adjust an associated function or system. In other words, usability is enhanced. In addition, the user input device may be associated with different functions and, using the present method, the user input device may be controlled such that a different haptic feedback is used for each of the different functions. This also enhances usability.

In the context of the present disclosure, haptic feedback types define the kind of haptic feedback that is to be provided to the user via the user input device. Haptic feedback is understood as a feedback that can be haptically perceived by the user. Haptic feedback may comprise a movement of the user input device or a portion thereof. Additionally or alternatively, haptic feedback may comprise a resistance provided against a manipulation of the user input device by the user. The resistance may be constant or variable.

Environmental conditions are considered in general to be conditions of an environment in which the user input device or, more generally speaking the vehicle comprising the user input device is operated. The environmental conditions may affect the manipulation of the user input device. In an example, the vehicle may be operated on a bumpy road, wherein in another example, the vehicle may be operated on a relatively smooth road. Thus, if different types of haptic feedback are used in these examples, usability of the user input device is enhanced. In a simple case, the user input device comprises a rotary knob, which can be manipulated by a user exclusively by turning and thus has only one degree of freedom. In this example, only one function can be set with the user input device. Therefore, the haptic feedback type out of a plurality of haptic feedback types may be set only depending on the environmental data.

In an example, different functions can be selected with the user input device and associated adjustments may be done via the user input device. Thus, the user input device must be operable in at least two degrees of freedom. Thus, one of the two functions can be selected, and then a manipulation can be carried out in order to adjust the selected function. In this example, the plurality of haptic feedback types may comprise two haptic feedback types. Accordingly, a different haptic feedback type may be assigned or associated to each of the two different functions. Accordingly, the selection of a haptic feedback type for the user input device out of a plurality of haptic feedback types would only be based on the first data and, thus, on the basis of the manipulation of the user input device by the user.

In another example, it is conceivable that a plurality of haptic feedback types are assigned to each of the different functions. Accordingly, the selection of a haptic feedback type for the user input device out of a plurality of haptic feedback types may be based on both the first data and the second data and, thus, on the basis of the both the manipulation and an environmental condition.

These explanations can be applied analogously to user input devices with which more than two functions can be selected and adjusted. Here, the user input device needs to have more than two degrees of freedom.

According to a further example, at least two function can be selected and adjusted using the user input device. Each of the at least two functions is associated with a certain manipulation of the user input device, i.e. a user needs to manipulate the user input device in a predefined manner in order to select the associated function. Once the function is selected an associated adjustment may be performed. Optionally, the user input device may be configurable in that a user may configure the at least two functions and the associated manipulations for selecting the at least two functions. This means that the user may determine which manipulation of the user input device leads to the selection of which function. Thus, the user input device may be adapted to the user's needs and preferences.

In an example, the obtained first data can comprise position data of the user input device. The position data may relate to a translatory position and/or to a rotatory position. The user input device can be mounted such that it is translatorily displaceable and/or rotatable. Thus, it is conceivable that the position of the user input device can be changed by rotating or translating, e.g. pressing, pushing or pulling, the user input device. In this context, it is additionally or alternatively conceivable that the user input device is laterally displaceably mounted. This means that it can be displaced to the side in various translatory positions. For example, the default position of the user input device can be in the center and from there it can be moved in four different directions. After having been moved in any one of the four different directions, the user input device may be rotatable in order to adjust an associated function. Thus, an appropriate haptic feedback type may be selected based on a translatory position and/or based on a rotatory position of the user input device. This further enhances usability, especially in cases in which multiple functions may be controlled and/or adjusted using the user input device.

In an example, the manipulation of the user input device can be associated with selecting a system to be adjusted using the user input device out of a plurality of systems. The selected haptic feedback type is therefore determined on the basis of the first data, wherein the first data is associated with the selection of a system to be adjusted. Thus, a haptic feedback type may be assigned to each system that can be adjusted using the user input device. Alternative a plurality of haptic feedback types may be assigned to each system that can be adjusted using the user input device. In other words, depending on the selected system, the haptic user feedback is different. This facilitates adjusting the different systems.

In the present context, the term "system" refers to a system for the vehicle, such as an air conditioning system, a heating system, a seat heating system, a seat ventilation system, a control of a driving mode, a control of a recuperation mode, a control of a speaker volume, a control of communication function, a navigation system, and/or a control of a user setting. Each of these systems can be adjusted within an associated adjustment range which may be reflected in the associated haptic feedback. As soon as a system to be adjusted is selected from a plurality of systems, the triggered haptic feedback of the selected haptic feedback type takes effect when the selected system is adjusted.

In an example, the haptic feedback of the selected haptic feedback type can be triggered upon a manipulation of the user input device associated with adjusting the selected system. In an example, the manipulation associated with adjusting the selected system happens after the selection of the system to be adjusted. Consequently, at least one haptic feedback type may be assigned to each of the systems. This is advantageous because the at least one haptic feedback type can be specifically adapted to each system. This makes it easier for the user to adjust the system.

In an example, one or more haptic feedback types out of the plurality of haptic feedback types can be associated with a selectable system based on a user setting. The user can therefore define the haptic feedback type associated with a selectable system himself via the user settings. In an example, the manipulation of the user input device can be associated with selecting a user setting system using the user input device out of a plurality of systems and setting one haptic feedback type out of the plurality of haptic feedback types based on the first data. Consequently, each of the haptic feedback types can be configured specifically by the user. This has the advantage that the user can configure the haptic feedback types in such a way that manipulation of the user input device which is associated with selecting a system to be adjusted using the user input device out of a plurality of systems can be carried out particularly easily and accurately.

In an example, the method further comprises selecting a visual feedback type for the user input device out of a plurality of visual feedback types based on the first data and/or based on the second data and/or based on the selected haptic feedback type, and triggering a visual feedback of the selected visual feedback type. This provides the user with additional feedback, which further simplifies the adjustment of systems by manipulating the user input device.

In an example, the second data can be indicative of an acceleration, an acceleration profile, an ambient temperature and/or a weather condition. These parameters affect a manipulation of the user input device. For examples, these parameters are indicative of a vibration e.g. caused by an uneven road surface. Additionally or alternatively an ambient temperature may be considered. It can be assumed, for example, that the user has cold hands at low ambient temperatures or may have wet hands at high ambient temperatures. This may cause difficulties when manipulating the user input device. Consequently, such cases are taken into account on the basis of the second data and a suitable haptic feedback type is selected accordingly. This facilitates the manipulation of the user input device.

In an example, each of the plurality of haptic feedback types comprise torque control data, detent control data and/or rotation angle range data. The torque control data specifies a torque required to manipulate the user input device by the user, whereby the torque can be variable along a translatory or rotational direction of manipulation of the user input device. The detent control data specify how many detents are provided and at which distance the detents are provided along a translatory or rotational direction of manipulation of the user input device. Moreover, the detent control data specify which force is required to overcome a detent. The distance and the force required to overcome a detent along a translatory or rotational direction of manipulation of the user input device can be variable. The rotation angle range data defines a rotation angle within which adjustment is possible.

In an example, at least one haptic feedback associated with at least one haptic feedback type out of the plurality of haptic feedback types comprises a variable resistance to the manipulation of the user input device. The variable resistance may be a function of the manipulation of the user input device. Thus, when manipulating the user input device, a resistance of the user input device varies, i.e. is not constant. This allows for a specific adaptation of the resistance to the manipulation of the user input device. More precisely, the variable resistance may be adapted to a function that may be adjusted using the user input device. This function may be associated with a selected system. Thus, different variable resistances may be used in connection with different systems. There are adjustments of systems for which a relatively high resistance to the manipulation is advantageous, for example to prevent unintentional manipulation of the user input device by the user, such as the adjustment of the driving mode system. For other systems a quick and easy manipulation can be preferable, so that a relatively low resistance to the manipulation is advantageous. This may be the case for the adjustment of the air conditioning and/or heating system or the adjustment of the speaker system.

In an example, at least one haptic feedback associated with at least one haptic feedback type out of the plurality of haptic feedback types comprises one or more local resistance peaks to the manipulation of the user input device, wherein the one or more local resistance peaks are associated with a predefined position of the user input device. This means that a resistance against the manipulation of the user input device is comparatively high if the user input device is in the one or more predefined positions and comparatively low outside these one or more predefined positions. One or more local resistance peaks can be used, for example, to implement or imitate one or more detents for the user input device. Consequently, the user input device may be manipulated intuitively.

In an example, different haptic feedbacks associated with different haptic feedback types comprise a plurality of local resistance peaks differing in a distance between the local resistance peaks and/or differing in a magnitude of the local resistance peaks. In other words, all different haptic feedback types comprise a plurality of local resistance peaks, wherein in different haptic feedback types, the local resistance peaks have different distances and/or different magnitudes. In this context, the distances between adjacent local resistance peaks can be uniformly or unevenly distributed along the translatory or rotational direction of manipulation of the user input device. Thus, different haptic feedback types may be provided in a simple manner.

In an example, at least one haptic feedback associated with at least one haptic feedback type out of the plurality of haptic feedback types comprises a limitation of a manipulation of the user input device. Here, a single limitation can be implemented, whereby, for example, only the manipulation of the user input in one translatory or rotational direction device is limited. Alternatively, two limitations can also be implemented, so that the manipulation of the user input device is limited in two translatory or rotational directions. The one or more limitations, thus, serve as end stops for the manipulation of the user input device. Further, the one or more limitations can be selected in such a way that they correspond to respective ends of the adjustment range described above. This leads to intuitive manipulation of the user input device.

The problem is further at least partially solved or alleviated by a data processing device comprising means for carrying out the method according to the present disclosure. Such a data processing device ensures that it is detected that a certain manipulation is performed and/or that an environmental condition is considered and on the basis of this a haptic feedback type is selected out of a plurality of haptic feedback types. Further, this ensures that a haptic feedback type is selected specifically based on the manipulation and/or the environmental condition. This makes it easier for the user to manipulate the user input device and also makes it easier for the user to adjust the previously explained systems, for example. Altogether, usability is enhanced.

The problem is further at least partially solved or alleviated by a computer program comprising instructions which, when the computer program is executed by a computer, cause the computer to carry out the method according to the present disclosure. Such a computer program ensures that it is detected that a certain manipulation is performed and/or that an environmental condition is considered and on the basis of this, a haptic feedback type is selected out of a plurality of haptic feedback types. Further, this ensures that a haptic feedback type is selected specifically based on the manipulation and/or the environmental condition. This makes it easier for the user to manipulate the user input device and also makes it easier for the user to adjust the previously explained systems, for example. In summary, usability is enhanced.

The problem is further at least partially solved or alleviated by a computer-readable storage medium comprising instructions which, when executed by a computer, cause the computer to carry out the method according to the present disclosure. Such a computer-readable storage medium ensures that it is detected that a certain manipulation is performed and/or that an environmental condition is considered and on the basis of this a haptic feedback type is selected out of a plurality of haptic feedback types. Further, this ensures that a haptic feedback type is selected specifically based on the manipulation and/or the environmental condition. This makes it easier for the user to manipulate the user input device and also makes it easier for the user to adjust the previously explained systems, for example. This improves usability.

The problem is further at least partially solved or alleviated by a user input system for a vehicle. The user input system comprises a user input device, a haptic feedback generator, and a data processing device according to the present disclosure. Moreover, the data processing device is communicatively coupled to the user input device. The data processing device is communicatively coupled to the haptic feedback generator. Additionally, the haptic feedback generator is mechanically coupled to the user input device. Such a user input system ensures that it is detected that a certain manipulation is performed and/or that an environmental condition is considered and on the basis of this, a haptic feedback type is selected out of a plurality of haptic feedback types. Further, this ensures that a haptic feedback type is selected specifically based on the manipulation and/or the environmental condition. This makes it easier for the user to manipulate the user input device and also makes it easier for the user to adjust the previously explained systems, for example. In other words, usability of the user input device is enhanced.

The problem is further at least partially solved or alleviated by a vehicle comprising a user input system according to the present disclosure. Such a vehicle ensures that it is detected that a certain manipulation is performed and/or that an environmental condition is considered and on the basis of this, a haptic feedback type is selected out of a plurality of haptic feedback types. Further, this ensures that a haptic feedback type is selected specifically based on the manipulation and/or the environmental condition. This makes it easier for the user to manipulate the user input device and also makes it easier for the user to adjust the previously explained systems, for example.

It should be noted that the above examples may be combined with each other irrespective of the aspect involved.

These and other aspects of the present invention will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a data processing device according to the present disclosure, wherein a method for controlling a user input device may be executed using the data processing device,
- Figure 2: shows a top view of a user input device forming part of a user input system according to the present disclosure in in a schematic representation,
- Figure 3: shows a side view of the user input device of Figure 2,
- Figure 4: shows the data processing device according to the present disclosure in a schematic representation, wherein also associated data is shown,
- Figure 5: illustrates steps of the method for controlling a user input device,
- Figure 6: illustrates a first type of a haptic feedback,
- Figure 7: illustrates a second type of a haptic feedback, and
- Figure 8: illustrates a third type of a haptic feedback.

### DETAILED DESCRIPTION

The Figures are merely schematic representations and serve only to illustrate examples of the disclosure. Identical or equivalent elements are in principle provided with the same reference signs.

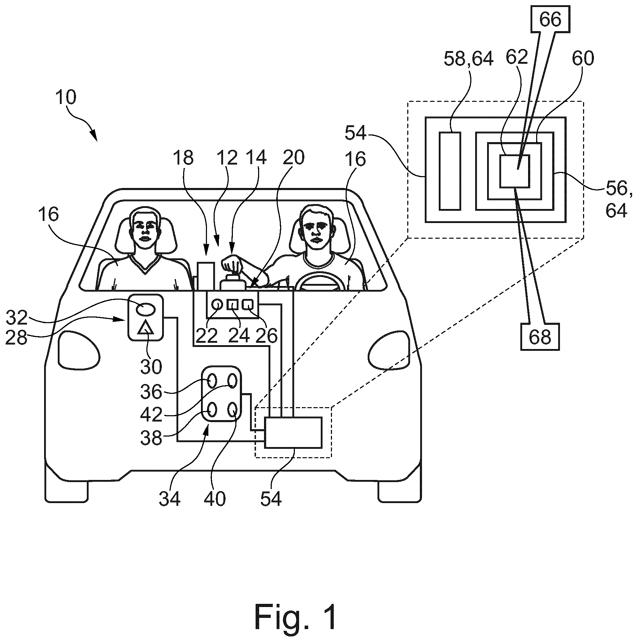

Figure 1 shows a vehicle 10 comprising a user input system 12 with a user input device 14 for users 16. In addition to the user input device 14, the vehicle 10 also comprises an optional secondary user input device 18 for the users 16. The secondary user input device 18 may comprise a touchscreen.

In the example shown in the figures, the user input device 14 comprises a rotary-push knob 44.

The user input device 14 and the secondary user input device 18 can be manipulated by the users 16, whereby their operation and function will be described in more detail further below.

In the present case, two users 16 are shown in Figure 1. Alternatively, it is also conceivable that the user input system 12 is provided for more or less than two users 16.

Further, the user input system 12 comprises a haptic feedback generator 20 which is configured to provide haptic feedback to one user 16 or several users 16. The haptic feedback generator 20 can comprise a variable resistance unit 22, a local resistance peaks unit 24 and/or a limitation unit 26. Alternatively, it is also conceivable that one unit is provided which combines two or all of the units 22, 24 and 26 within itself.

In Figure 1, the haptic feedback generator 20 is represented schematically only.

The haptic feedback generator 20 is associated with the user input device 14.

Alternatively, the haptic feedback generator 20 may be integrated into the user input device 14, i.e. it is possible that the user input device 14 comprises the haptic feedback generator 20.

The units 22, 24 and 26 are configured to apply a resistance that counteracts a manipulation of the user input device 14 by the user 16. The function of the units 22, 24 and 26 will be described in more detail later on.

For example, the haptic feedback generator 20 may comprise an electric motor configured to provide a torque acting against a manipulation of the user input device 14, in particular against a rotation of the user input device 14. Using such an electric motor, one or more of a variable resistance one or more resistance peaks and limitations may be provided. Thus, the electric motor may form one or more of a variable resistance unit 22, a local resistance peaks unit 24 and a limitation unit 26.

Furthermore, the user input system 12 comprises a visual feedback generator 28. which is configured to provide visual feedback to one user 16 or several users 16. The visual feedback generator 28 can comprise a display 30 and/or a light 32.

In Figure 1, the visual feedback generator 28 is represented schematically only.

The display 30 can be provided in the vicinity of the user input device 14 or the user input device 14 can comprise the display 30.

The light 32 can also be provided in the vicinity of the user input device 14 or the user input device 14 can comprise the light 32.

It is also possible that the optional secondary user input device 18, i.e. the touchscreen, forms part of the visual feedback generator 28. It is conceivable that the optional secondary user input device 18 forms part of the visual feedback generator 28 in addition to the display 30 and/or the light 32, or as an alternative thereto.

Furthermore, the user input system 12 comprises an environmental condition detector 34, which is configured to detect an environmental condition to which the vehicle 10 and/or the user input system 12 is exposed to. The environmental condition detector 34 comprises an acceleration sensor 36 configured to detect an acceleration and/or to provide an acceleration profile. Alternatively or additionally, the environmental condition detector 34 comprises an ambient temperature sensor 38 configured to detect an ambient temperature. Ambient temperature refers to the ambient temperature of the user input device 14. Alternatively, the ambient temperature of the vehicle 10 can be considered.

Furthermore, it is also conceivable that two temperature sensors 38 are used to detect both the ambient temperature of the user input device 14 and the ambient temperature of the vehicle 10. Alternatively or additionally the environmental condition detector 34 comprises a weather unit 40. The weather unit 40 can be configured to obtain weather data. Alternatively or additionally, the weather unit 40 can comprise a rain sensor 42 configured to detect rain and/or a light sensor 44 configured to detect light in particular configured to detect sun radiation. Additionally or alternatively, the environmental condition detector 34 may generally include all sensors or may be configured to obtain data from all sensors that may be useful for detecting the environment.

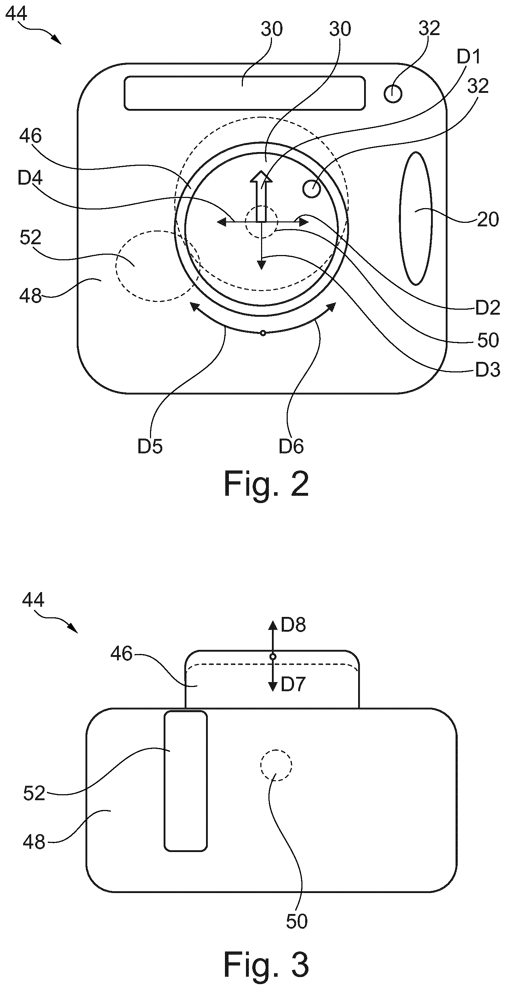

Figures 2 and 3 show the user input device 14 in a more detailed, schematic representation. The user input device 14 comprises a rotary-push knob 44 comprising a knob 46 supported on a base 48.

The knob 46 has a circular cylindrical shape. Alternatively, other shapes are also conceivable. For example, the knob 46 can also be a knob 46 with a prismatic shape or an at least partially spherical shape.

The knob 46 is movably mounted relative to the base 48. The knob 46 can be moved from a default position, which is in the center of the base 48, in four directions D1, D2, D3, D4, indicated by the arrows, as shown in Figure 2. A displacement of the knob 46 in the direction D1 is indicated by the large arrow, while the knob 46 indicated by the dashed line represents a corresponding displacement in the direction D1.

Furthermore, the knob 46 is mounted rotatably relative to the base 48. Thus, the knob 46 may be turned in the directions of rotation D5 and D6.

Furthermore, the knob 46 can be displaced from a default position towards the base 48 in the direction D7 and/or away from the base 48 in the direction D8. This means that the knob 46 may be pushed towards the base 48 and may be released. The knob 46 is spring biased towards the released position. Figure 3 shows the knob 46 in a released position (solid lines) and in a displaced position (dashed line).

All these displacements of the rotary-push knob 44 are possible by applying an external force to the knob 46. The external force may result from a manipulation by one of the users 16.

Additionally, in accordance with the above explanations the variable resistance unit 22, the local resistance peaks unit 24 and the limitation unit 26 can be provided on the base 48 or on the knob 46 (see Figure 2). Moreover, in accordance with the above explanations the display 30 and the light 32 can be provided also on the base 48 or on the knob 46 (see Figure 2).

Furthermore, the user input device 14 comprises at least one position sensor 50, which is configured to detect a position of the knob 46 in accordance with the above explanations. A displacement of the knob 46 may be detected by detecting a plurality of subsequent positions.

In addition, the user input device 14 comprises an optional adjustment motor 52 which is configured to adjust the user input device 14 without manipulation by a user 16. To be more precise, the adjustment motor 52 is configured to adjust the knob 46. The adjustment of the knob by the adjustment motor 52 can be carried out by adjustment motor 52 in one or more of the directions D1-D8 as described above.

In addition, user input system 12 comprises a data processing device 54 (cf. Figure 1).

The data processing device 54 comprises a data storage unit 56 and a data processing unit 58.

The data storage unit 56 comprises a computer-readable storage medium 60.

On the computer-readable storage medium 60, there is provided a computer program 62.

The computer program 62 and, thus, also the computer-readable storage medium 60, comprise instructions which, when executed by the data processing unit 58, or, more generally speaking, a computer, cause the computer or the data processing unit 58 to carry out a method for controlling a user input device for a vehicle.

Consequently, the data storage unit 56 and the data processing unit 58 form means 64 for carrying out a method for controlling a user input device for a vehicle.

In the present example, the data processing device 54 is communicatively coupled to the components of the vehicle 10, in particular to the user input device 14, more precisely its position sensor 50, the haptic feedback generator 20, the visual feedback generator 28 and the environmental condition detector 34.

It is noted that even though in the present example, the data processing device 54 forms part of the vehicle 10, it is also possible that the data processing device 54 is provided outside the vehicle 10. In the latter case, the data processing device 54 may be wirelessly coupled to the components of the vehicle 10, in particular to the user input device 14, more precisely its position sensor 50, the haptic feedback generator 20, the visual feedback generator 28 and the environmental condition detector 34.

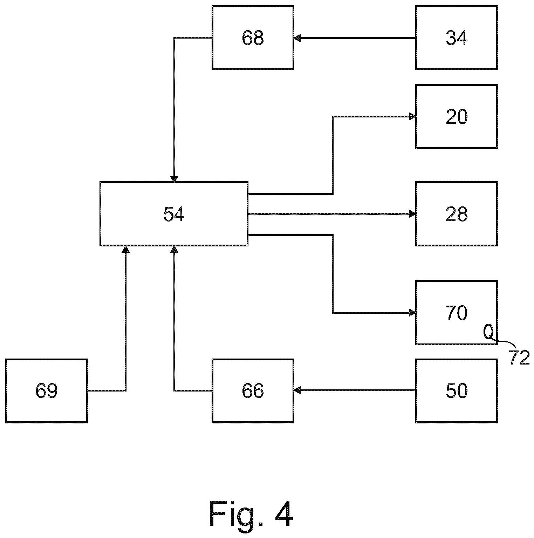

Figure 4 shows the data processing device 54 and associated data in a schematic representation.

The data processing device 54 is configured to receive first data 66 indicative of a manipulation of the user input device 14 that can be obtained from the position sensor 50.

Therefore, first data 66 comprises position data of the user input device 14.

The data processing device 54 is further configured to receive second data 68 indicative of an environmental condition. The second data 68 is obtained from the environmental condition detector 34.

The data processing device 54 is also configured to receive third data 69 indicative of a manipulation of the optional secondary user input device 18.

The data processing device 54 is communicatively connected to the haptic feedback generator 20 wherein data processing device 54 is able to trigger a haptic feedback provided by the haptic feedback generator 20.

Further, the data processing device 54 is communicatively connected to the visual feedback generator 28 wherein data processing device 54 is able to trigger a visual feedback provided by the visual feedback generator 28.

In addition, the data processing device 54 is communicatively connected to a system unit 70 which is representative of a plurality of systems 72 which are selectable and adjustable by manipulation of the user input device 14. The system unit 70 is representative of one or more of the following systems: air conditioning system, heating system, seat heating system, seat ventilation system, control of driving mode, control of recuperation, control of speaker volume, control of communication function, navigation system, control of user setting.

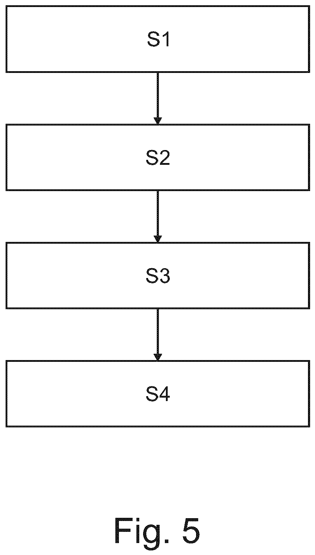

The data processing device 54 is configured for carrying out the method for controlling a user input device for a vehicle (cf. Figure 5).

This method comprises a first step S 1 which comprises obtaining first data 66 indicative of a manipulation of the user input device 14, wherein a manipulation of the user input device 14 is carried out by one of the users 16, and wherein a manipulation of the user input device 14 is possible in various ways according to the previous explanations. Thus, the knob 46 may be pushed, turned, moved to the left, moved to the right, moved to the front and/or moved to the back, cf. directions D1 to D8 as described above. The detected manipulation of the user input device 16 is associated with selecting a system to be adjusted using the user input device 14 out of a plurality of systems as described above.

Alternatively or additionally first step S 1 comprises obtaining second data 68 indicative of an environmental condition. More precisely the second data is indicative of an acceleration, an acceleration profile, an ambient temperature and/or a weather condition.

In a second step S2 a haptic feedback type for the user input device 14 is selected out of a plurality of haptic feedback types based on the first data 66 and/or based on the second data 68.

In a third step S3 a visual feedback type for the user input device 14 is selected out of a plurality of visual feedback types based on the first data 66 and/or based on the second data 68 and/or based on the selected haptic feedback type. The visual feedback is in turn provided by the visual feedback generator 28 and can be provided to the user via the display 30 and/or light 32. Alternatively or additionally, the visual feedback provided by the visual feedback generator 28 may be provided to the optional secondary user input device 18.

In a fourth step S4 a haptic feedback of the selected haptic feedback type is triggered. More precisely, the haptic feedback of the selected haptic feedback type is triggered upon a manipulation of the user input device 14 associated with adjusting the selected system 72. This manipulation happens after the system 72 has been selected.

Moreover, the visual feedback of the selected visual feedback type is triggered.

The haptic feedback associated with at least one haptic feedback type out of the plurality of haptic feedback types can comprise a variable resistance to the manipulation of the user input device 14.

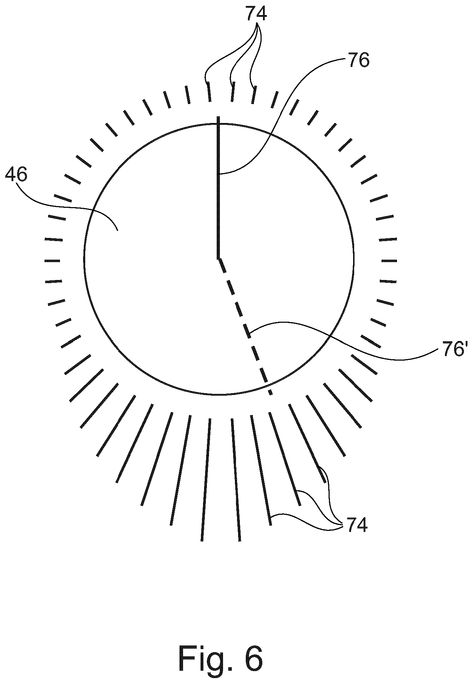

The variable resistance may be a function of the manipulation of the user input device 14. This will be explained in more detail in Figures 6 to 8. To improve overview, only the knob 46 is shown in these figures. Furthermore, lines 74 are shown along the circumference of each knob in Figures 6 to 8, which are intended to represent the haptic feedback. In addition, knob 46 is provided with a line 76, which marks a default position in Figures 6 to 8.

All the lines mentioned here should only contribute to a better understanding of the following explanations and are not necessarily present in physical form.

In Figure 6, the lines 74 have different lengths and a length of each line 74 is associated with a magnitude of a resistance acting against a manipulation of the knob 46.

Thus, if the user input device 14, i.e. the knob 46, is turned out of the default position as indicated by line 76, the user 16 first feels a comparatively small and constant resistance indicated by a group of relatively short lines 74 having approximately the same length. If the knob 46 is turned further, e.g. to a position indicated by the dashed line 76', the resistance increases to a higher magnitude. This is indicated by comparatively long lines adjacent to the position indicated by the dashed line 76'.

The maximum resistance is provided if the knob 46 is turned to a position corresponding to a 6 o'clock position, i.e. if the knob 46 is turned by approximately 180 degrees starting from the default position indicated by line 76.

In addition, the haptic feedback associated with at least one haptic feedback type out of the plurality of haptic feedback types can comprise one or more local resistance peaks acting against the manipulation of the user input device 14, wherein each of the one or more local resistance peaks is associated with a predefined position of the user input device 14.

The predefined positions are indicated by the positioning of the lines representing the resistance. This means that at each position at which a line 74 is provided, a local resistance peak is provided wherein in between the lines 74 the resistance is lower. The local resistance peaks are understood to act as detents. In the example of Figure 6, a distance between neighboring lines 74 is the same for each pair of neighboring lines 74.

This type of haptic feedback may for example be used for adjusting an interior temperature of the vehicle, wherein for example the default position of the knob 46 corresponds to 21 degrees Celsius, i.e. a medium temperature. In this example, the knob 46 may be turnable clockwise for increasing the interior temperature and counterclockwise for decreasing the temperature. The above-described haptic feedback type has the effect that a user feels a comparatively low resistance when only slightly increasing or decreasing the temperature with respect to 21 degrees Celsius, e.g. when adjusting the temperature between 18 and 24 degrees Celsius. If the user wishes to set a more extreme temperature, e.g. a temperature below 18 degrees Celsius or above 24 degrees Celsius, the user will feel a higher resistance.

Moreover, a local distance peak or detent may be provided for a certain temperature interval, e.g. 0,1 degrees Celsius, 0,25 degrees Celsius or 0,5 degrees Celsius.

The user may select the adjusting of an interior temperature of the vehicle by moving the knob 46 to the left, to the right, to the front or to the rear.

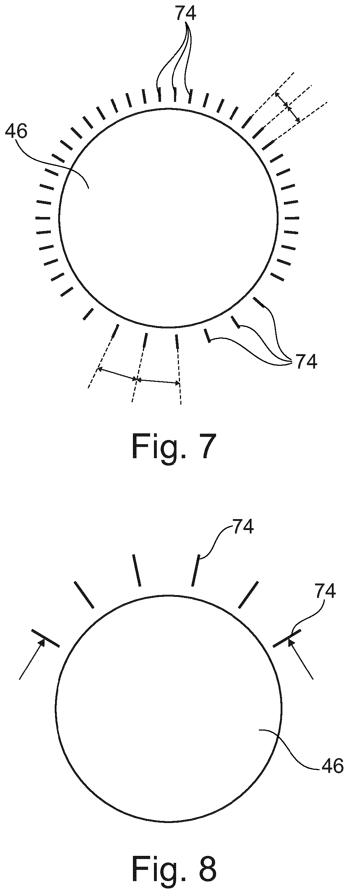

In another example or in association with a different system 72, it is conceivable that the haptic feedback comprises a plurality of local resistance peaks differing in a distance between the local resistance peaks. A different distance between the local resistance peaks is shown as an example in Figure 7. Here, the lines 74 are closer together in the upper portion of the representation of the knob 46 and further spaced apart in the lower portion of the representation of the knob 46. In the example of Figure 7, the magnitude of the resistance is the same for all local resistance peaks.

This type of haptic feedback may for example be used for adjusting a zoom in a map of a navigation system, wherein for example the default zoom is associated with a 12 o'clock position of the knob 46. In this example, the knob 46 may be turnable clockwise for increasing the zoom and counterclockwise for decreasing the zoom. The above-described haptic feedback type has the effect that a user can more finely adjust the zoom if the zoom is relatively close to the default zoom. However, if the zoom is a lot smaller than the default zoom or a lot larger than the default zoom, the zoom may only be adjusted in a rougher manner.

The user may select the adjusting of a zoom by moving the knob 46 to the left, to the right, to the front or to the rear. It is understood that in case a plurality of functions are controlled by the knob 46, one function is associated with one single direction of movement only.

Moreover, the haptic feedback associated with at least one haptic feedback type out of the plurality of haptic feedback types can comprise a limitation of a manipulation of the user input device. Such a limitation is represented in Figure 8 in that the lines 74 are arranged only over a portion of the circumference of the knob 46.

Accordingly, the knob 46 can only be adjusted within the limitations. It is conceivable that the limitations are provided as desired, so it is also possible that the knob 46 can be rotated through any angle within the limitations. Figure 8 shows two limitations, i.e. both a clockwise rotation and a counterclockwise rotation is limited. In between these limitations, the haptic feedback comprises 4 local resistance peaks. Alternatively, it is also conceivable that only a single-sided limitation is provided.

This type of haptic feedback may for example be used for adjusting a ventilation level in an interior of the vehicle. Each selectable ventilation level may be associated with one of the local resistance peaks. This means that only distinct ventilation levels associated with one of the local resistance peaks are selectable.

The user may select the adjusting of a zoom by moving the knob 46 to the left, to the right, to the front or to the rear. It is understood that in case a plurality of functions are controlled by the knob 46, one function is associated with one single direction of movement only.

It is noted that it is possible that a user selects one or more of the haptic feedback types out of the plurality of haptic feedback types for one or more of the selectable systems. This means that a user may choose which haptic feedback he or she wishes to have for a specific selectable system. This may be done by adjusting associated user settings. The user input device 14 may also be usable to this end. This means that the user settings may be adjusted by manipulating the user input device 14.

Optionally, the user input system may also be configured to execute the following method for controlling a user input device for a vehicle. According to this method, the control is based on the secondary user input device 18, i.e. in the present example the touchscreen. The data processing device 54 may be configured to execute this method as well. It is noted that this method is independent from the method for controlling a user input device as explained above in connection with Figures 1 to 8.

In a first step of the optional method third data is obtained, wherein the third data is indicative of a manipulation of the secondary user input device 18. In the present example, the third data is indicative of a manipulation of the touch screen, i.e. of a user input on the touch screen. This manipulation may relate to a selection of a system to be adjusted and/or of an adjustment of a system of the vehicle. Consequently, the plurality of systems 72 are also selectable and adjustable by operation of the secondary user input device 18.

In case this selection and/or this adjustment may as well be performed by manipulating the user input device 14, the optional method comprises triggering a movement of the user input device 14, i.e. the knob 46.

Consequently, the user input device 14 moves in the same manner in which it would have been moved by the user 16 if the user had done the selection and/or the adjustment using the user input device 14 instead of the secondary user input device 18.

The fact that the user input device 14 moves following the selection and/or adjustment done via the secondary user input device 18 allows the user 16 to notice that the selection and/or adjustment would also have been possible by manipulating the user input device 14. In other words, the user 16 learns that he or she could as well have used the user input device 14 instead of the secondary user input device 18.

In the context of this optional method, the user input device 14, more precisely the knob 46 may be moved using the same electric motor that is also used for providing the haptic feedback.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: user input system
- 14: user input device
- 16: user
- 18: secondary user device
- 20: haptic feedback generator
- 22: variable resistance unit
- 24: local resistance peaks unit
- 26: limitation unit
- 28: visual feedback generator
- 30: display
- 32: light
- 34: environmental condition detector
- 36: acceleration sensor
- 38: ambient temperature sensor
- 40: weather unit
- 42: rain sensor
- 44: rotary-push knob
- 46: knob
- 48: base
- 50: position sensor
- 52: adjustment motor
- 54: data processing device
- 56: data storage unit
- 58: data processing unit
- 60: computer-readable storage medium
- 62: computer program
- 64: means for carrying out a method for controlling a user input device for a vehicle
- 66: first data
- 68: second data
- 69: third data
- 70: system unit
- 72: system
- 74: line
- 76: line
- 76': dashed line

- D 1: sliding direction
- D2: sliding direction
- D3: sliding direction
- D4: sliding direction
- D5: direction of rotation
- D6: direction of rotation
- D7: direction
- D8: direction

- S1: first step
- S2: second step
- S3: third step
- S4: fourth step

## Claims

1. A method for controlling a user input device (14) for a vehicle (10), wherein the user (16) input device (14) can be manipulated by a user, the method comprising:
- obtaining first data (66) indicative of a manipulation of the user input device (14) and/or obtaining second data (68) indicative of an environmental condition,
- selecting a haptic feedback type for the user input device (14) out of a plurality of haptic feedback types based on the first data (66) and/or based on the second data (68), and
- triggering a haptic feedback of the selected haptic feedback type.

2. The method of claim 1, wherein the obtained first data (66) comprises position data of the user input device (14).

3. The method of claim 1 or 2, wherein the manipulation of the user input device (14) is associated with selecting a system (72) to be adjusted using the user input device (14) out of a plurality of systems (72).

4. The method of claim 3, wherein the haptic feedback of the selected haptic feedback type is triggered upon a manipulation of the user input device (14) associated with adjusting the selected system (72).

5. The method of claim 3 or 4, wherein one or more haptic feedback types out of the plurality of haptic feedback types are associated with a selectable system (72) based on a user setting.

6. The method according to any one of the preceding claims, further comprising
- selecting a visual feedback type for the user input device (14) out of a plurality of visual feedback types based on the first data (66) and/or based on the second data (68) and/or based on the selected haptic feedback type, and
- triggering a visual feedback of the selected visual feedback type.

7. The method according to any one of the preceding claims, wherein the second data (68) is indicative of an acceleration, an acceleration profile, an ambient temperature and/or a weather condition.

8. The method of any one of the preceding claims, wherein at least one haptic feedback associated with at least one haptic feedback type out of the plurality of haptic feedback types comprises a variable resistance to the manipulation of the user input device (14), wherein the variable resistance is a function of the manipulation of the user input device (14).

9. The method of any one of the preceding claims, wherein at least one haptic feedback associated with at least one haptic feedback type out of the plurality of haptic feedback types comprises one or more local resistance peaks to the manipulation of the user input device (14), wherein the one or more local resistance peaks are associated with a predefined position of the user input device (14).

10. The method of claim 9, wherein different haptic feedbacks associated with different haptic feedback types comprise a plurality of local resistance peaks differing in a distance between the local resistance peaks and/or differing in a magnitude of the local resistance peaks.

11. The method of any one of the preceding claims, wherein at least one haptic feedback associated with at least one haptic feedback type out of the plurality of haptic feedback types comprises a limitation of a manipulation of the user input device (14).

12. A data processing device (54) comprising means (64) for carrying out the method of any one of the preceding claims.

13. A computer program (62) comprising instructions which, when the program is executed by a computer, cause the computer to carry out the method of claims 1 to 11.

14. A computer-readable storage medium (60) comprising instructions which, when executed by a computer, cause the computer to carry out the method of claims 1 to 11.

15. A user input system (12) for a vehicle (10), the user input system (12) comprising a user input device (14), a haptic feedback generator (20), and a data processing device (54) according to claim 12,
wherein the data processing device (54) is communicatively coupled to the user input device (14),
wherein the data processing device (54) is communicatively coupled to the haptic feedback generator (20), and
wherein the haptic feedback generator (20) is mechanically coupled to the user input device (14).

16. A vehicle (10) comprising a user input system (12) according to claim 15.
